# EUROPEAN PATENT APPLICATION

(11) **EP 3 693 163 A1**
(43) Date of publication of application: **12.08.2020**
(21) Application number: 19155775.0
(22) Date of filing: 06.02.2019
(51) Int. Cl.: B32B 37/12

(54) **METHOD AND APPARATUS FOR MANUFACTURING A DEVICE**

(71) Applicant: Koninklijke Philips N.V., 5656 AG Eindhoven (NL)
(72) Inventor: MAYR, Jens Falk, 5656 AE Eindhoven (NL)
(74) Representative: de Haan, Poul Erik

(57) **Abstract**

The invention relates to a method for manufacturing a device (30), wherein first and second parts (31, 35) of the device are glued together. The gluing comprises applying a liquid first adhesive (32) onto the first part, applying a liquid second adhesive (33) onto the first part, thereby generating a liquid adhesive bed on which the second part is arranged, and curing the liquid adhesive bed, wherein one of the first and second adhesives has a larger chemical resistance and a larger stiffness than the other of the first and second adhesives, after the liquid adhesive bed has been cured. This can lead to a bonding having a strong chemical resistance against disinfectant cleaning means and being relatively flexible for compensating different expansions of the different parts due to, for instance, heat, resulting in a longer lifetime of the bonding and hence of the manufactured device.

## Description

### FIELD OF THE INVENTION

The invention relates to a method and an apparatus for manufacturing a device like a medical device with a display, wherein the device includes a first part and a second part which are glued to each other. The invention relates further to such a device and to a computer program for controlling the apparatus for manufacturing a device.

### BACKGROUND OF THE INVENTION

US 2018/0059462 A1 discloses a method for manufacturing a display apparatus. At a peripheral border of an opposed surface of a display device or a functional substrate to be opposed to and bonded to the display device a first resin is formed which maintains a distance between the display device and the functional substrate. For adhering the display device and the functional substrate to each other, a second resin is applied at the peripheral border after the first resin has been formed. In particular, it is disclosed that firstly the first resin, which has the function to ensure that the distance between the display device and the functional substrate is maintained, is cured, whereafter the second resin, which is used for adhering the display device and the functional substrate to each other, is applied and cured.

If the display apparatus is manufactured in this way, the chemical resistance of the bonding between the display device and the functional substrate against, for instance, chemical means for cleaning the display apparatus or the mechanical resistance of this bonding against different expansions like thermal expansions of the display device and the functional substrate can be relatively low, thereby reducing the lifetime of the display apparatus.

### SUMMARY OF THE INVENTION

It is regarded as being an object of the invention to provide a method and an apparatus for manufacturing a device which can have a larger lifetime. It is a further object of the present invention to provide such a device having a larger lifetime and to provide a computer program for controlling the apparatus for manufacturing a device.

In a first aspect of the present invention a method for manufacturing a device is presented, wherein the method includes gluing a first part of the device to a second part of the device, wherein the gluing comprises:
- applying a liquid first adhesive onto the first part,
- applying a liquid second adhesive onto the first part, thereby generating a liquid adhesive bed comprising the first adhesive and the second adhesive,
- arranging the second part on the liquid adhesive bed,
- curing the liquid adhesive bed, wherein one of the first and second adhesives has a larger chemical resistance and a larger stiffness than the other of the first and second adhesives, after the liquid adhesive bed has been cured.

Since the liquid first and second adhesives are both applied onto the first part and thereby generate a liquid adhesive bed comprising the first adhesive and the second adhesive, since the second part is arranged on the liquid adhesive bed and since then the liquid adhesive bed is cured, the bonding between the first part and the second part is not only formed by one of the first and second adhesives, but by both adhesives. In other words, the second part is arranged on the liquid adhesive bed, before the first adhesive and the second adhesive have been completely cured and hardened and, after the first adhesive and the second adhesive have been completely cured and hardened, the first adhesive adheres to the first part and the second part and also the second adhesive adheres to the first part and the second part. Moreover, since one of the first and second adhesives has a larger chemical resistance and a larger stiffness than the other of the first and second adhesives, the bonding between the first part and the second part can have a relatively strong chemical resistance provided by one of the first and second adhesives and it can also be relatively flexible or soft, in order to compensate for, for instance, different expansions of the first part and the second part due to environmental influences like heat, wherein this relatively good flexibility or relatively large softness can be provided by the other of the first and second adhesives. This allows for a longer lifetime of the bonding between the first part and the second part and hence to a longer lifetime of the manufactured device.

The first part and the second part preferentially have different thermal expansion coefficients. Moreover, in a preferred embodiment the second part is a display, particularly a touch display, and the first part includes a receiving element for receiving the display. The receiving element for receiving the display can be, for instance, a chassis or a bezel. The manufactured device is preferentially a medical device like a patient monitor being configured to show medical measurement results on the display.

The first adhesive preferentially has a higher viscosity than the second adhesive, wherein preferentially the second adhesive has the larger chemical resistance and stiffness than the first adhesive. Moreover, preferentially the first adhesive is applied such that it forms a sidewall of a channel, wherein the channel is formed by this sidewall and a further sidewall formed by the first part and a bottom also formed by the first part, wherein the second adhesive is filled into this formed channel. Since the second adhesive is filled into the formed channel, the viscosity of the second adhesive does not need to fulfill certain requirements, i.e., for instance, the viscosity of the second adhesive can be relatively low. This allows to choose the second adhesive from a larger group of possible adhesives such that it can be better adapted to the desired chemical resistance and stiffness, thereby allowing for a further improved lifetime of the bonding between the first part and the second part and hence of the manufactured device.

It is preferred that, while curing the liquid adhesive bed, the curing of the first adhesive and the curing of the second adhesive do not interfere with each other. Preferentially, the first and second adhesives are polymer adhesives, wherein the first and second adhesives are chosen such that, during curing, a polymerization of the first adhesive and a polymerization of the second adhesive do not interfere with each other. If the polymerization of the first and second adhesives do not interfere with each other, it can be ensured that the first and second adhesives fulfill their respective functions as good as possible after having been cured. This can lead to a further increased lifetime of the bonding between the first part and the second part and hence of the manufactured device. In a preferred embodiment one of the first and second adhesives is a two-component adhesive comprising a resin component and a hardener component and the other of the first and second adhesives is a one component air-humidity hardened adhesive, wherein the polymerizations of the first and second adhesives do not interfere with each other.

In a preferred embodiment the first adhesive is applied such that it has one of the following cross-sectional shapes: a circular shape, a triangular shape, an oval shape, a rectangular shape. If the first adhesive is applied with a circular cross-sectional shape, the application process can be relatively simple by using, for instance, a dosing needle having a circular outlet opening through which the first adhesive is applied. Also if the cross-sectional shape is oval, the first adhesive can be applied relatively easily, because also in this case a dosing needle with a circular outlet opening, through which the first adhesive is applied, can be used, wherein, after the first adhesive has been applied, it can be pressed onto the applied first adhesive, in order to modify the initially circular cross-section such that it becomes an oval cross section. This pressing onto the applied first adhesive can be carried out by, for instance, the dosing needle itself or by another means. If the first adhesive is applied such that it has a circular cross-sectional shape or an oval cross-sectional shape, a dosing needle with a circular outlet opening just needs to follow a rectangular path or any other path along which the first adhesive should be applied onto the first part, wherein for this movement of the dosing needle along the path a robot or any other machine might be used. It is especially not required to rotate the dosing needle while following the path.

If the first adhesive is applied such that it has a triangular cross-sectional shape, a contact area between a surface of a part to be glued and a surface of the first adhesive can be larger. Moreover, the applied first adhesive with the triangular cross-sectional shape can also be pressed such that it is modified to a substantially rectangular cross-sectional shape, wherein in this case the contact areas between the first adhesive and the first and second parts can be even larger.

The first adhesive with the triangular cross-sectional shape can be applied by using, for instance, a dosing needle having a triangularly shaped outlet opening wherein, in order to apply the first adhesive along a rectangular path or any other non-straight path, the dosing needle needs to be rotated. For pressing the first adhesive such that the triangular cross-sectional shape is modified into a rectangular cross-sectional shape, the dosing needle or another means might be used.

The first adhesive and the second adhesive can be applied sequentially or in parallel. If the first adhesive and the second adhesive are applied sequentially, one of the adhesives might be better used as a barrier for holding the other of the adhesives at the desired location on the first part. This can lead to a further improved bonding between the first and second parts. If the first adhesive and the second adhesive are applied in parallel, the manufacturing process can be carried out faster.

In a further aspect of the present invention an apparatus for manufacturing a device is presented, wherein the apparatus is configured to glue a first part of the device to a second part of the device, wherein the apparatus comprises:
- a first adhesive applicator configured to apply a liquid first adhesive onto the first part,
- a second adhesive applicator configured to apply a liquid second adhesive onto the first part, thereby generating a liquid adhesive bed comprising the first adhesive and the second adhesive, wherein one of the first and second adhesives has a larger chemical resistance and a larger stiffness than the other of the first and second adhesives, after the liquid adhesive bed has been cured, and
- an arranging unit configured to arrange the second part on the liquid adhesive bed.

In another aspect of the present invention a device comprising a first part and a second part, which are glued to each other, is presented, wherein a first adhesive adheres to the first part and to the second part and wherein a second adhesive also adheres to the first part and to the second part, wherein one of the first and second adhesives has a larger chemical resistance and a larger stiffness than the other of the first and second adhesives. Preferentially, the first adhesive forms a sidewall of a channel, wherein the channel is formed by this sidewall and a further sidewall formed by the first part and a bottom also formed by the first part, wherein the second adhesive is arranged within this channel. It is further preferred that the second adhesive is arranged within this channel such that there are no gaps between the sidewalls and the second adhesive. Moreover, preferentially the device is manufacturable by applying the first adhesive onto the first part in liquid form, by applying the second adhesive onto the first part in liquid form, thereby generating a liquid adhesive bed comprising the first adhesive and the second adhesive, by arranging the second part on the liquid adhesive bed, and by curing the liquid adhesive bed.

In a further aspect of the present invention a computer program for controlling an apparatus for manufacturing a device is presented, wherein the computer program comprises program code means for causing the apparatus for manufacturing a device as defined in claim 11 to carry out the method for manufacturing a device as defined in any of claims 1 to 10, when the computer program is run on a computer controlling the apparatus.

It shall be understood that the method of claim 1, the apparatus of claim 11, the device of claim 12 and the computer program of claim 15, have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE DRAWINGS

In the following drawings:
Fig. 1 shows a flowchart exemplarily illustrating an embodiment of a method for manufacturing a device,
Fig. 2 shows schematically and exemplarily a cross-sectional view of a first part of the device to be manufactured,
Fig. 3 shows schematically and exemplarily a top view on the first part of the device to be manufactured,
Fig. 4 shows schematically and exemplarily a cross-sectional view of the first part of the device to be manufactured, after a first adhesive has been applied to the first part,
Fig. 5 shows schematically and exemplarily a top view on the first part of the device to be manufactured, after the first adhesive has been applied to the first part,
Fig. 6 shows schematically and exemplarily a cross-sectional view of the first part of the device to be manufactured, after the first adhesive and a second adhesive have been applied to the first part,
Fig. 7 shows schematically and exemplarily the manufactured device, after a second part of the device to be manufactured has been pressed into a liquid adhesive bed formed by the first adhesive and the second adhesive and after this liquid adhesive bed has been cured,
Fig. 8 shows schematically and exemplarily an embodiment of an apparatus for manufacturing the device, and
Fig. 9 shows schematically and exemplarily a cross-section of a part of a further device which has been manufactured by pressing a second part of the device into a liquid adhesive bed formed by first and second adhesives on a first part of the device.

### DETAILED DESCRIPTION OF EMBODIMENTS

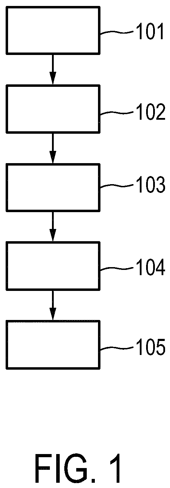

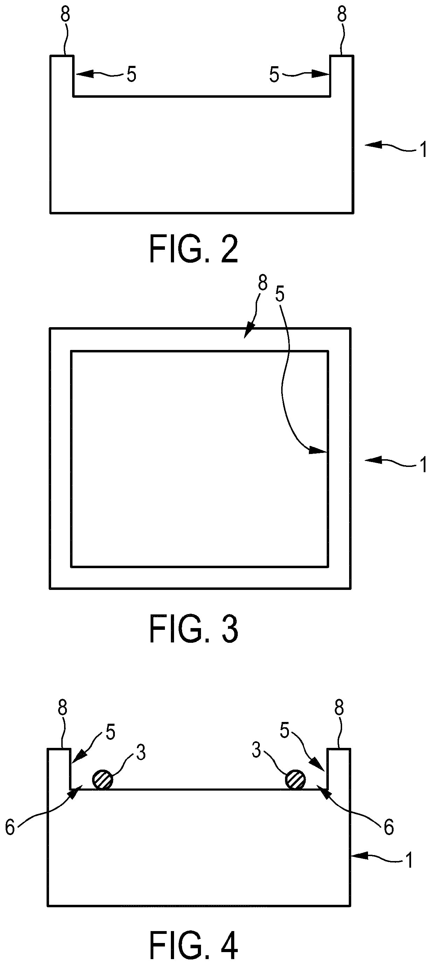

In the following an embodiment of a method for manufacturing a device will exemplarily be described with reference to a flowchart shown in Fig. 1. In step 101 a first part of the device to be manufactured is provided. This first part 1 is schematically and exemplarily illustrated in Fig. 2. In this embodiment, the first part 1 is a casing of the device to be manufactured, wherein the casing 1 includes functional components like a transmitter and receiver for transmitting and sending signals like a receiver for receiving measurement signals from sensors for carrying out medical measurements like a measurement of the heart rate, of the blood pressure, et cetera. Further possible functional components of the casing 1 are a controller for controlling the different components within the casing 1, for controlling a display to be bonded to the casing 1, electrical and/or optical contacts, a data processor for processing, for instance, received signals, et cetera. The different functional components within the casing 1 are not shown in Fig. 2 for clarity reasons. It should be noted that the figures are exemplary schematic figures which are not drawn to scale.

The casing 1, which could also be named chassis or bezel, comprises a surrounding protruding edge 8 with an inner sidewall 5. Both, the protruding edge 8 and the inner sidewall 5, are schematically and exemplarily illustrated in the cross-sectional view shown in Fig. 2 and in the top view shown in Fig. 3.

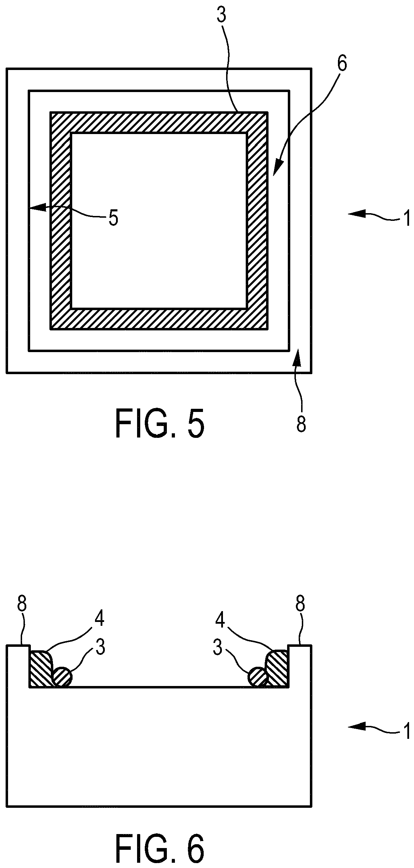

In step 102 a liquid first adhesive 3 is applied onto the first part 1. The first part 1 with the applied liquid first adhesive 3 is schematically and exemplarily illustrated in Figs. 4 and 5, wherein Fig. 4 shows a cross-sectional view and Fig. 5 shows a top view. The first adhesive 3 has a relatively high viscosity and is applied circumferentially with a distance to the inner sidewall 5 of the protruding edge 8. The first adhesive therefore forms a sidewall of a circumferential channel 6, wherein the channel 6 is formed by this sidewall and the inner sidewall 5 of the protruding edge 8. The bottom of this channel 6 is formed by a bottom of the first part 1. Since the first liquid adhesive 3 has a relatively high viscosity, it can be applied with a certain cross-sectional shape, although being liquid. In the example schematically illustrated in Fig. 4 the liquid first adhesive has a circular cross-sectional shape. In another embodiment the cross-sectional shape can be different, for instance, it can be triangular, oval, rectangular, et cetera.

In step 103 a second liquid adhesive 4 is applied onto the first part, thereby generating a liquid adhesive bed comprising the liquid first adhesive 3 and the liquid second adhesive 4. In this embodiment the second adhesive has a lower viscosity than the first adhesive and is filled into the channel 6 formed by the inner sidewall 5 of the protruding edge 8 and the already applied liquid first adhesive 3. The first part with the applied liquid first and second adhesives forming a liquid adhesive bed is schematically and exemplarily illustrated in Fig. 6.

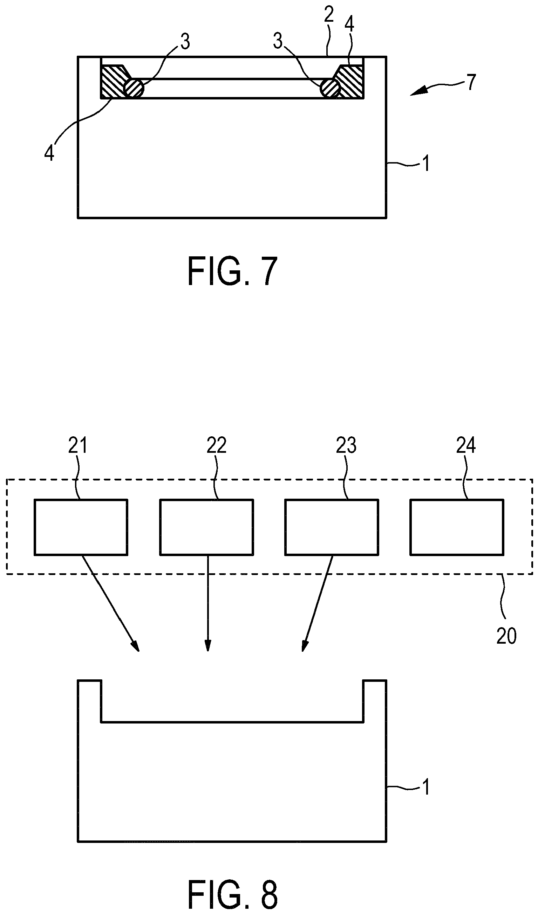

In step 104 a second part 2 is arranged on the liquid adhesive bed formed by the first and second adhesives 3, 4. In this embodiment, the second part 2 is a display element like a touch-display element. The display element 2 comprises several components like a liquid-crystal display (LCD) element, a touch-screen element or a cover glass element, wherein these different components are not shown in, for instance, Fig. 7 for clarity reasons. Fig. 7 illustrates the situation after the second part 2 has been arranged on and pressed onto the liquid adhesive bed formed by the first and second adhesives 3, 4. In step 105 the liquid adhesive bed is cured, in order to generate a bonding between the first part 1 and the second part 2, wherein both adhesives 1, 2 adhere each to the first part 1 and to the second part 2. The result is a device 7 which is preferentially a medical device like a patient monitor.

The first adhesive 3 and the second adhesive 4 are chosen such that they do not interfere with each other, while the liquid adhesive bed is cured. In particular, the first and second adhesives are polymer adhesives, wherein the first and second adhesives 3, 4 are chosen such that, during curing, the polymerization of the first adhesive 3 and the polymerization of the second adhesive 4 do not interfere with each other. In this embodiment one of the first and second adhesives 3, 4 is a two-component adhesive comprising a resin component and a hardener component and the other of the first and second adhesives 3, 4 is a one component air-humidity hardened adhesive, wherein these adhesives 3, 4 do not interfere with each other.

The second adhesive, which has a lower viscosity than the first adhesive, has a larger chemical resistance and stiffness than the first adhesive after curing. For instance, the viscosity of the second adhesive can be in a range from 1000 to 30000 mPa·s, wherein the viscosity of the first adhesive is larger and can have a value up to, for instance, 100000 mPa·s.

The stiffness of the respective adhesive refers to its ability to absorb stress through deformation/deflection, after the adhesive has been cured. Thus, a softer adhesive can absorb more stress through deformation/deflection than a less soft adhesive, after the respective adhesive has been cured. In an embodiment the first adhesive has a stiffness, i.e. Shore hardness, within a range of 50 to 70 Shore A and the second adhesive has a stiffness within a range from 80 to 90 Shore A. Moreover, in an embodiment the flexibility defined as the elongation at break can be in the range from 250 to 400 percent for the first adhesive and in the range from 100 to 250 percent for the second adhesive.

The chemical resistance preferentially refers to the ability of the adhesive to withstand the impact of disinfection fluids, wherein an adhesive, which has a higher chemical resistance, is less adversely influenced by disinfection fluids than an adhesive having a smaller chemical resistance. In an embodiment the chemical resistance is determined in compliance with ISO 200812 Paints and Varnishes - Determination of Resistance to Liquids - Part 1: Immersion in Liquids other than Water (ISO 2812-1:2017) or Part 4: Spotting methods (ISO 2012-4:2007). The disinfection fluids, which are used for defining the chemical resistance, preferentially include at least one of ethanol, isopropanol, isopropyl alcohol, propanol, sodium hypochlorite, 2-butoxyethanol, hydrogen peroxide, quaternary ammonia, diethylene glycol butyl ether, ammonium chloride, and chlorhexidine. For instance, in an embodiment one of the first and second adhesives has a higher chemical resistance than the other of the first and second adhesives with respect to ethanol or another alcohol, wherein the chemical resistance is preferentially determined in compliance with ISO 200812, but can also be determined in another way.

An apparatus for manufacturing a device, which is configured to carry out the method described above with reference to Fig. 1, will in the following be exemplarily described with reference to Fig. 8.

In this embodiment the apparatus 20 for manufacturing the device 8 comprises a first adhesive applicator 21 configured to apply the liquid first adhesive 3 onto the first part 1 and a second adhesive applicator 22 configured to apply the liquid second adhesive 4 onto the first part 1, in order to generate a liquid adhesive bed comprising the first adhesive 3 and the second adhesive 4. The apparatus 20 also comprises an arranging unit 23 configured to arrange the second part 2 on the liquid adhesive bed formed by the first and second adhesives 3,4.

The apparatus 20 comprises a controller 24 for controlling the different components of the apparatus 20. The apparatus 20 is adapted to work automatically due to the control provided by the controller 24, wherein the first adhesive applicator 21 preferentially comprises a robot, particularly a robotic arm, with a dosing needle for applying the first adhesive 3 onto the first part 1. The second adhesive applicator 22 preferentially also comprises a robot, particularly a robotic arm, with a dosing needle for automatically applying the second adhesive 4 onto the first part 1. The arranging unit 23 preferentially includes a further robot, especially a further robotic arm, for automatically arranging the second part 2 onto the liquid adhesive bed formed by the first and second adhesives 3, 4.

A medical device generally needs to withstand a mechanical impact stress and the impact of disinfectant fluids over lifetime. The bonding between the first part and the second part is therefore formed such that it has a large resistance against disinfectant fluids and is withstanding a mechanical shock and vibrations because one of the first and second adhesives is relatively soft and flexible. The first and second parts can have different length coefficients, wherein in an embodiment the bonding can be achieved without any gap between the first and second parts. The first adhesive is relatively soft and provides the desired ability to absorb length changes. The first adhesive also operates as a barrage for the second adhesive, which has a lower viscosity and generates the main resistance against disinfectant fluids, so that the second adhesive can be applied in the channel. Moreover, the bonding between the first and second parts is preferentially waterproof and disinfectant fluid proof, wherein the disinfectant fluid proof preferentially refers to at least one of the following disinfectant fluids: Oxivir® Tb Wipes, SANI-CLOTH® PLUS, Carpe DiemTb wipes, Bacillol Af, Virex® Tb. However, the bonding can also be disinfectant fluid proof with respect to other disinfectant fluids.

The use of the low viscosity second adhesive can generate a very leakage tight bonding and can also lead to a smooth surface between the display and the casing, i.e. between the first part and the second part, due to the capillary action effect, thereby eliminating a gap between the first part and the second part. The resulting bonding also has a very strong mechanical stability against vibration and shock.

Although in above described embodiments the bonding is achieved by using a first adhesive and a second adhesive, in further embodiments additional adhesives can be used for forming the bonding between the first part and the second part.

Moreover, although in above described embodiments the first part is a casing and the second part is a display of a device, the first part and the second part can also be other parts of another device which requires that the bonding between these parts fulfills high mechanical requirements and at the same time provides a high resistance against the impact of disinfectant fluids. For instance, the bonding method can also be used for bonding different parts of a defibrillator, fetal monitor products, ultrasound measurement devices, et cetera.

The first adhesive applicator can comprise an automated computerized numerical control (CNC) machine or robot and a controlled pump with a dosing needle for applying the first adhesive to the first part. The first adhesive can be applied in a cylindrical form, i.e. with a circular cross-sectional shape, or in another geometrical form like a triangular, elliptical or oval form. For instance, the dosing needle can be controlled to press the cylindrical adhesive form into an oval form.

The first adhesive is preferentially an adhesive having a relatively high viscosity that builds a barrier for the second adhesive having a relatively low viscosity, thereby generating a channel in which the second adhesive should be filled, wherein the applied still liquid high viscosity first adhesive can also provide a support for holding the second part on the first part, i.e., for instance, for holding the display within the chassis or bezel, when both parts are joined together, i.e. when the second part is pressed onto the still liquid adhesive bed formed by the first and second adhesives.

Also the second adhesive applicator can comprise an automated CNC machine or robot with a controlled pump and a dosing needle for applying the second adhesive into the channel formed by the inner wall of the first part and the already applied first adhesive. After both adhesives have been applied and form the liquid adhesive bed, the second part is pressed into the liquid adhesive bed, which could also be regarded as being a gluing bed, by using the arranging unit which might also comprise a computer controlled machine or robot.

The resulting bond between the first part and the second is on the one hand highly chemically resistant and stiff, i.e. comprises a highly cross-linked part, and on the other hand has flexible and soft characteristics, in order to be able to absorb changes in length which might be different for the different parts, for instance, due to different thermal expansion coefficients which might also be named length coefficients. The formed bond is able to compensate for different length coefficients of different materials of the first and second parts.

The first adhesive, which, in comparison to the second adhesive and in relation to the protruding edge 8, could also be regarded as being an inner adhesive, provides a flexibility for absorbing the majority of different length extensions of different materials of the first and second parts. The second adhesive, which could be regarded as being an outer adhesive, is less flexible and provides a high chemical and mechanical robustness.

Although in the above described embodiments the first adhesive has a higher viscosity than the second adhesive, in other embodiments both adhesives can also have a same viscosity. For instance, both adhesives can have a relatively high viscosity. The term *"low viscosity adhesive* " can refer to an adhesive having a viscosity being smaller than 50000 mPa·s and the term *"high viscosity adhesive"* can refer to an adhesive having a viscosity value being larger than 80000 mPa·s.

Although in above described embodiments one of the adhesives is a one-component adhesive and the other of the two adhesives is a two-component adhesive, it is also possible that both components are one-component adhesives or two-component adhesives. If a two-component adhesive is used, the two components, i.e. the hardener and the resin, are mixed in a desired ratio, wherein then the mixture is applied onto the first part of the device to be manufactured. The first and second adhesives are preferentially applied such that no air bubbles, sink marks, gaps et cetera occur between the first part and the second part at the bonding location.

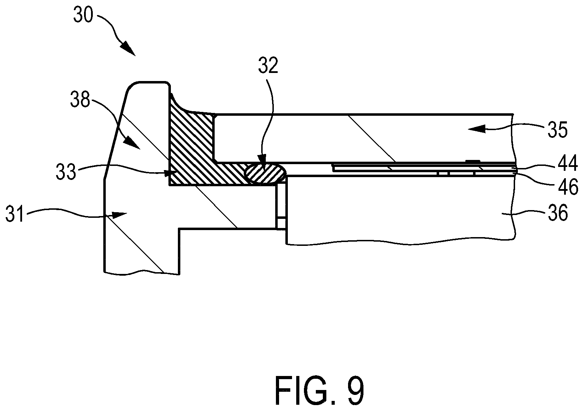

Fig. 9 schematically and exemplarily illustrates a cross-section of a part of a further device 30 manufactured by using the method described above with reference to Fig. 1. The device comprises a casing 31, which could also be named bezel, chassis or frame, with a protruding edge 38 which circumferentially surrounds and protects a cover glass 35 of a display comprising the cover glass 35, touch foils 44, 46 and an LCD component 36. In this example the casing 31 forms the first part and the cover glass 35 of the display forms the second part. The first part 31 and the second part 35 have been glued together by using a first adhesive 32 and a second adhesive 33. The first adhesive 32 is softer than the second adhesive 33 and the second adhesive 33 has a larger chemical resistance against disinfection fluids than the first adhesive 32. The LCD component 36, the touch foils 44, 46 and the cover glass 35 are bonded together. The display 35, 36, 44, 46 can be bonded to the casing 31 at further locations. For instance, the LCD module 36 can also be directly bonded to the casing 31. In particular, the bottom of the LCD module 36 can be bonded to an inner surface of the casing 31, especially by using the first adhesive.

Although in above described embodiments the protruding edge 38 has a height such that the top of the protruding edge 38 is above the top of the cover class 35, in another embodiment in the manufactured device the top of the edge 38 and the top of the cover glass 35 can also have the same height level. Generally, the top of the first part and the top of the second part can have same height levels or different height levels, after the device has been manufactured. In an embodiment the top of a LCD front glas being a second part and the top of a casing receiving the LCD front glas and being a first part have a same height level.

Although in above described embodiments the first adhesive and the second adhesive are applied sequentially, i.e. although in above described embodiments the first adhesive is applied before applying the second adhesive, in another embodiment the first and second adhesives can also be applied in parallel.

Although in an above described embodiment the second part is a display comprising an LCD component, in another embodiment the second part can also be another kind of element, especially it can comprise another display element like an organic light emitting diode (OLED) display element.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfill the functions of several items recited in the claims. The mere fact that certain measures are recited in mutually different dependent claims does not indicate that a combination of these measures cannot be used to advantage. The control of the apparatus for manufacturing a device in accordance with the method for manufacturing a device can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a method for manufacturing a device, wherein first and second parts of the device are glued together. The gluing comprises applying a liquid first adhesive onto the first part, applying a liquid second adhesive onto the first part, thereby generating a liquid adhesive bed on which the second part is arranged, and curing the liquid adhesive bed, wherein one of the first and second adhesives has a larger chemical resistance and a larger stiffness than the other of the first and second adhesives, after the liquid adhesive bed has been cured. This can lead to a bonding having a strong chemical resistance against disinfectant cleaning means and being relatively flexible for compensating different expansions of the different parts due to, for instance, heat, resulting in a longer lifetime of the bonding and hence of the manufactured device.

## Claims

1. A method for manufacturing a device, wherein the method includes gluing a first part (1, 31) of the device (7, 30) to a second part (2, 35) of the device (7, 30), wherein the gluing comprises:
- applying a liquid first adhesive (3, 32) onto the first part (1, 31),
- applying a liquid second adhesive (4, 33) onto the first part (1, 31), thereby generating a liquid adhesive bed comprising the first adhesive (3, 32) and the second adhesive (4, 33),
- arranging the second part (2, 35) on the liquid adhesive bed,
- curing the liquid adhesive bed, wherein one of the first and second adhesives (3, 32; 4, 33) has a larger chemical resistance and a larger stiffness than the other of the first and second adhesives (3, 32; 4, 33), after the liquid adhesive bed has been cured.

2. The method for manufacturing a device as defined by claim 1, wherein the first adhesive (3, 32) has a higher viscosity than the second adhesive (4, 33).

3. The method for manufacturing a device as defined by claim 2, wherein the first adhesive (3, 32) is applied such that it forms a sidewall of a channel, wherein the channel is formed by this sidewall and a further sidewall formed by the first part (1, 31) and a bottom also formed by the first part (1, 31), wherein the second adhesive (4, 33) is filled into this formed channel.

4. The method for manufacturing a device as defined by any of claims 2 and 3, wherein the second adhesive (4, 33) has the larger chemical resistance and stiffness than the first adhesive (3, 32).

5. The method for manufacturing a device as defined by any of the preceding claims, wherein, while curing the liquid adhesive bed, the curing of the first adhesive (3, 32) and the curing of the second adhesive (4, 33) do not interfere with each other.

6. The method for manufacturing a device as defined by claim 5, wherein the first and second adhesives are polymer adhesives, wherein the first and second adhesives are chosen such that, during curing, a polymerization of the first adhesive (3, 32) and a polymerization of the second adhesive (4, 33) do not interfere with each other.

7. The method for manufacturing a device as defined by any of the preceding claims, wherein one of the first and second adhesives (3, 32; 4, 33) is a two-component adhesive comprising a resin component and a hardener component and the other of the first and second adhesives (3, 32; 4, 33) is a one component air-humidity adhesive.

8. The method for manufacturing a device as defined by any of the preceding claims, wherein the first adhesive (3, 32) and the second adhesive (4, 33) are applied such that they are both in contact with the first part (1, 31) and the second part (2, 35), after the second part (2, 35) has been arranged on the liquid adhesive bed.

9. The method for manufacturing a device as defined by any of the preceding claims, wherein the second part (2) is a display, particularly a touch display, and the first part (1) comprises a receiving element for receiving the display.

10. The method for manufacturing a device as defined by any of the preceding claims, wherein the device (7, 30) is a medical device.

11. An apparatus for manufacturing a device, wherein the apparatus (20) is configured to glue a first part (1, 31) of the device (7, 30) to a second part (2, 35) of the device (7, 30), wherein the apparatus (20) comprises:
- a first adhesive applicator (21) configured to apply a liquid first adhesive (3, 32) onto the first part (1, 31),
- a second adhesive applicator (22) configured to apply a liquid second adhesive (4, 33) onto the first part (1, 31), thereby generating a liquid adhesive bed comprising the first adhesive (3, 32) and the second adhesive (4, 33), wherein one of the first and second adhesives (3, 32; 4, 33) has a larger chemical resistance and a larger stiffness than the other of the first and second adhesives (3, 32; 4, 33), after the liquid adhesive bed has been cured, and
- an arranging unit (23) configured to arrange the second part (2, 35) on the liquid adhesive bed.

12. A device (7, 30) comprising a first part (1, 31) and a second part (2, 35), which are glued to each other, wherein a first adhesive (3, 32) adheres to the first part (1, 31) and to the second part (2, 35) and wherein a second adhesive (4, 33) also adheres to the first part (1, 31) and to the second part (2, 35), wherein one of the first and second adhesives (3, 32; 4, 33) has a larger chemical resistance and a larger stiffness than the other of the first and second adhesives (3, 32; 4, 33).

13. The device as defined by claim 12, wherein the first adhesive (3, 32) forms a sidewall of a channel, wherein the channel is formed by this sidewall and a further sidewall formed by the first part (1, 31) and a bottom also formed by the first part (1, 31), wherein the second adhesive (4, 33) is arranged within this channel.

14. The device as defined by any of claims 12 and 13, wherein the device is manufacturable by applying the first adhesive (3, 32) onto the first part (1, 31) in liquid form, by applying the second adhesive (4, 33) onto the first part (1, 31) in liquid form, thereby generating a liquid adhesive bed comprising the first adhesive (3, 32) and the second adhesive (4, 33), by arranging the second part (2, 35) on the liquid adhesive bed, and by curing the liquid adhesive bed.

15. A computer program for controlling an apparatus for manufacturing a device, the computer program comprising program code means for causing the apparatus for manufacturing a device as defined in claim 11 to carry out the method for manufacturing a device as defined in any of claims 1 to 10, when the computer program is run on a computer controlling the apparatus.
